# EUROPÄISCHE PATENTSCHRIFT

(11) **EP 3 046 194 B1**
(45) Veröffentlichungstag und Bekanntmachung des Hinweises auf die Patenterteilung: **24.11.2021**
(21) Anmeldenummer: 15305046.3
(22) Anmeldetag: 16.01.2015
(51) Int. Cl.: H02G 3/12, H02G 3/14

(54) **Kombination aus Elektroinstallationsgerät und Abdeckblende mit Doppelhaken**
Combination of an electrical installation device and covering screen with double hook
Combinaison d'appareil d'installation électrique et d'obturateur à double crochet

(43) Veröffentlichungstag der Anmeldung: 20.07.2016
(73) Patentinhaber: Tehalit GmbH, 67716 Heltersberg (DE)
(72) Erfinder: Arnold, Hans-Joachim, 67706 Krickenbach (DE); Schwarz, Jürgen, 67705 Trippstadt (DE); Vatter, Klaus, 66978 Clausen (DE)
(74) Vertreter: Cabinet Nuss

(56) Entgegenhaltungen:
- EP-A1- 1 351 359
- EP-A1- 2 149 952
- EP-A2- 2 793 338
- DE-A1-102008 045 004
- DE-U1- 29 913 343
- DE-U1-202010 016 144
- US-B1- 6 664 467

## Beschreibung

Die Erfindung betrifft Kombinationen aus einem Elektroinstallationsgerät und einer Abdeckblende gemäß dem Oberbegriff des Anspruchs 1, insbesondere bestimmt für den Einbau in Geräteeinbaukanäle.

Geräteeinbaukanäle sind Leitungsführungskanäle, die für den Einbau von Elektroinstallationsgeräten - Schalter, Steckdosen, Sicherungen usw. ― bestimmt sind. Sie werden seit vielen Jahren in den unterschiedlichsten Ausführungen in großen Mengen hergestellt und verarbeitet. Sie bestehen im wesentlichen aus einem trogförmigen Unterteil mit einem überwiegend U- bis C-förmigen Querschnitt und einem Deckel. Die Befestigung des Deckels erfolgt mit Hilfe von speziellen Deckelhalteprofilen, die die offene Frontseite des Kanalunterteils begrenzen.

Die Befestigung der Elektroinstallationsgeräte erfolgt grundsätzlich auf zwei unterschiedliche Arten. Die eine Befestigungsart ist die Befestigung an Halteleisten, die an der Innenseite des Kanalbodens vorgesehen sind. Die andere Befestigungsart ist der frontrastende Einbau, d. h. die Befestigung der Installationsgeräte an den Deckelhalteprofilen. Die vorliegende Erfindung betrifft die Befestigung zwischen Blende und Gerät unabhängig wie das Gerät im Kanal befestigt ist.

Für den frontrastenden Einbau werden entweder spezielle Einbaudosen oder spezielle Elektroinstallationsgeräte verwendet. Beide sind mit Haltevorrichtungen ausgerüstet, die mit den Deckelhalteprofilen des Geräteeinbaukanals korrespondieren. Man vergleiche beispielsweise DE-U-299 02 280, DE-U-94 06 360, EP-A-0 913 902, FR-A-27 56 431, DE-U-93 14 551 DE 10 2008 045004 A1, EP 1 351 359 A1 oder DE-U-29913343.

An den Stellen, an denen Installationsgeräte eingesetzt sind, werden spezielle Abdeckblenden verwendet, um die elektrische Sicherheit sowie die Ästhetik zu gewährleisten. Diese Abdeckblenden werden entweder zusätzlich auf die Deckelhalteprofile des Geräteeinbaukanals oder auf das bereits montierte Installationsgerät aufgerastet. Man vergleiche beispielsweise DE-U-93 14 551 oder FR-A 2 756 431.

Nachteilig an diesen handelsüblichen Geräten und Abdeckblenden ist die Tatsache, dass die als Deckel fungierende Die Dokumente DE 299 13 343 U1, DE 20 2010 016144 U1, US 6 664 467 B1, EP 2 149 952 A1 und EP 2 793 338 A2 zeigen Beispiele von Abdeckblenden, die durch Haltevorrichtungen an entsprechenden Profilen eines Geräteeinbaukanals befestigt werden. Die beschriebenen Vorrichtungen greifen dabei jeweils an verschiedene Profile des Kanals an, ohne zusätzlichen besonderen Effekt. Besondere Maßnahmen für einen Toleranzausgleich um eine wackelfreie Befestigung zu erzeugen, sind dort nicht erwähnt.

Abdeckblenden mit den zusätzlichen Haltevorrichtungen korrespondieren ein Spiel aufweisen.

Um die Toleranzen zwischen Kanal und Geräteinbau ausgleichen zu können (0,9 mm) ist es heute in der Tat notwendig konstruktiv ein Spiel in der Schnappverbindung vorzusehen, damit das Einrasten immer gewährleistet ist.

Durch dieses Spiel bleibt die Blende immer beweglich und vermittelt dem Kunden den Eindruck dass die Blende nicht sicher befestigt ist. Des Weiteren entstehen durch dieses Spiel Spalten die nicht erwünscht sind.

Die Aufgabenstellung bestand darin, dass die montierte Abdeckblende unabhängig von der Toleranzlage immer einen festen und wackelfreien Sitz am Einbaugerät aufweist.

Der vorliegenden Erfindung liegt daher die Aufgabe zugrunde, eine Kombination aus Elektroinstallationsgerät und Abdeckblende anzugeben, die diese Nachteile weitestgehend behebt.

Diese Aufgabe wird gelöst durch eine Kombination mit den Merkmalen des Anspruchs 1.

Dank der vorliegenden Erfindung kann ein gewisser Toleranzausgleich T gewährleistet werden so dass, die Abdeckblende am Einbaugerät wackelfrei jedoch sicher befestigt werden kann denn das Einbaugerät und Abdeckblende bilden eine Einheit, die bei Bedarf auch wieder gelöst werden kann.

Anhand der Zeichnung soll die Erfindung in Form eines Ausführungsbeispiels näher erläutert werden. Es zeigen jeweils:
Fig. 1 eine perspektivische Ansicht eines Beispiels eines Teils einer Rückseite einer erfindungsgemäßen Abdeckblende,
Fig. 2 eine vergrößerte Ansicht eines Teils der Fig. 1, auf der eine perspektivische Ansicht eines erfindungsgemäßen Doppelhakens gezeigt wird,
Fig. 3a und 3b eine vergrößerte Ansicht eines Schnitts entlang der halben Breite der Abdeckblende im Bereich der Verbindung zwischen Abdeckblende und einem montierten Einbaugerät in einer ersten Position (Blende maximal unten), jeweils von einer Seite (links) und der gegenüberliegenden Seite (rechts) gesehen,
Fig. 4a und 4b eine vergrößerte Ansicht eines Schnitts entlang der halben Breite der Abdeckblende im Bereich der Verbindung zwischen Abdeckblende und einem montierten Einbaugerät in einer zweiten Position (Blende maximal oben), jeweils von einer Seite (links) und der gegenüberliegenden Seite (rechts) gesehen.

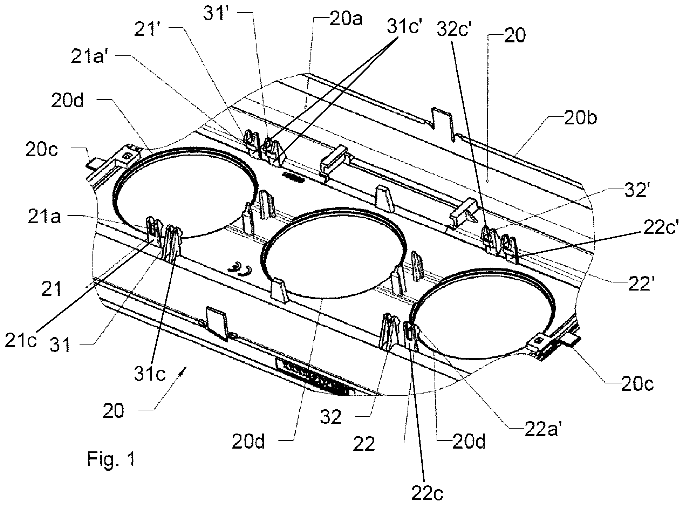

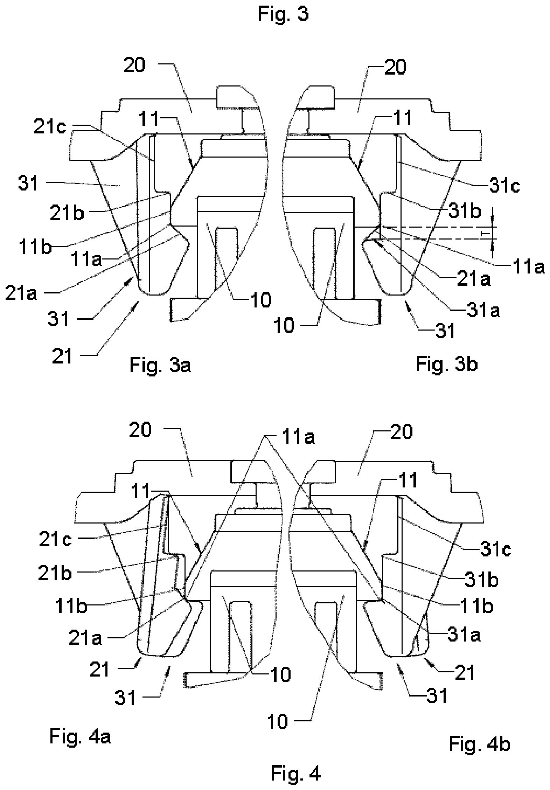

Figur 1 zeigt die perspektivische Ansicht eines Teils der Rückseite der erfindungsgemäßen Abdeckblende 20 für ein Einbaugerät 10 (hier nicht dargestellt), z. B. die in den Figuren 3 und 4 schematisch dargestellte Schuko-Dreifachsteckdose. Die Abdeckblende 20 besteht aus einem flachen reckeckigen Zentralteil 20a mit einer beispielsweise kürzeren Breite als Länge. Entlang der länglichen Seite geht ein zum Einbaugerät 10 hin gerichteter Rand 20b. Entlang der Breite befinden sich am geraden Rand (hier nur ein Abschnitt davon gezeigt) Verbindungsorgane 20c, die eine Verbindung zu anderen Abdeckblenden 20 ermöglichen, z. B. im Form einer Einsteck- oder Klippverbindung. Die Abdeckblende besitzt somit im Wesentlichen eine rechteckige Form mit jeweils zwei parallelen Seiten bzw. Ränder.

Das Zentralteil 20a besitzt in diesem Beispiel drei Öffnungen 20d, die den Zugang z. B. zu den Steckkontakten der Dreifachsteckdose des nicht gezeigten Einbaugerätes 10 ermöglichen. In dem dargestellten Beispiel sind ferner erste Haltevorrichtungen auf der Rückseite der Abdeckblende 20 als vier Paare Doppelhaken 21, 31 ; 21', 31' ; 22, 32 ; 22', 32' ausgebildet und so angebracht, dass jeweils mindestens ein Doppelhaken 21, 31 ; 21', 31' ; 22, 32 ; 22', 32' an der linken und rechten länglichen Seite des zu montierenden Einbaugeräts 10 angreift.

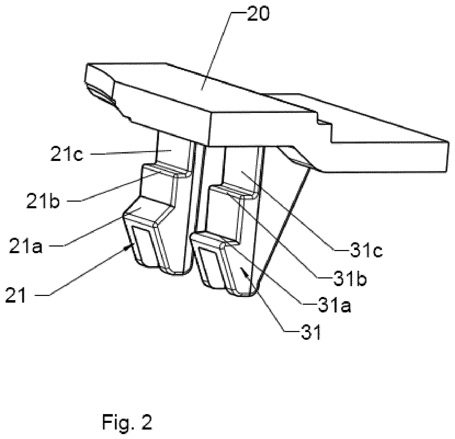

Figur 2 zeigt eine vergrößerte Ansicht einer der ersten Haltevorrichtungen aus Figur 1, die als ein (hier nach unten weisender) Doppelhaken 21, 31 ausgebildet ist.

Es ist erfindungsgemäß vorgesehen, dass jeder Doppelhaken 21, 31 ; 21', 31' ; 22, 32 ; 22', 32' aus einem flexiblen zurückfedernden ersten Stufenrasthaken 21, 21' ; 22, 22' sowie einem starren nicht-zurückfedernden zweiten Stufenrasthaken 31, 31' ; 32, 32' besteht. Wie auf den Figuren 1 und 2 zu sehen, stehen diese Doppelhaken 21, 31 ; 21', 31' ; 22, 32 ; 22', 32' senkrecht nach oben bzw. nach unten vom Zentralteil 20a hinweg jedoch immer in Richtung Einbaugerät 10. Sie haben vorteilhafterweise etwa gleiche Abmessungen, insbesondere eine gleiche Höhe und sind auf dem Zentralteil 20a links und rechts der etwa mittigen Öffnungen 20d oder des mittigen Teils der Abdeckblende 20 angebracht, wo später das Einbaugerät 10 eingeführt und/oder an der Abdeckblende 20 lösbar befestigt wird (s. Fig. 3 und 4).

Erfindungsgemäß weisen die ersten Stufenrasthaken 21, 21' ; 22, 22' jeweils eine schräge Rastfläche 21a, 21a' ; 22a, 22a' und die zweiten Stufenrasthaken 31, 31'; 32, 32' jeweils eine rechtwinklige treppenförmige obere (nahe dem Einbaugerät 10) Rastfläche 31a, 31a' ; 32a ; 32a' auf. Diese Flächen werden so ausgestaltet und an den ersten bzw. zweiten Stufenrasthaken 21, 21' ; 22, 22', 31, 31'; 32, 32' angebracht, dass sie bei dem Aufschieben der Abdeckblende 20 auf den länglichen Vorsprung 11, 11' (eventuell als eine Rastnut ausgebildet) des Einbaugerätes 10 erfindungsgemäß einrasten wobei ein sicherer, jedoch wieder lösbarer, Halt ohne Spiel entsteht. Die Funktionsweise wird insbesondere aus den Figuren 3a,b und 4a,b deutlich.

Die zweite Haltevorrichtung des Einbaugeräts 10 ist als ein sich länglich erstreckender seitlicher äußerer Vorsprung 11, 11' am Einbaugerät 10 ausgebildet, welcher jeweils eine rechtwinklige (rechteckige) Außenkante 11a, 11a' aufweist, die als Vorsprung 11, 11' mit der besagten schrägen Rastfläche 21a, 21a' ; 22a, 22a' und der besagten rechtwinkligen treppenförmigen oberen Rastfläche 31a, 31a' ; 32a ; 32a' der ersten Stufenrasthaken 21, 21' ; 22, 22' bzw. der zweiten Stufenrasthaken 31, 31' ; 32, 32' in Kontakt gerät und kraft- oder formschlüssig mit diesen kooperiert um einen Toleranzausgleich T zu gewährleisten und die Abdeckblende 20 am Einbaugerät 10 wackelfrei zu besfestigen (siehe Fig. 3 und 4). Es entsteht somit ein Kontakt zwischen der rechteckigen horizontalen unteren Fläche des Vorsprungs 11 und der oberen rechteckigen Fläche der zweiten Stufenrasthaken 31, 31' ; 32, 32' (siehe Fig. 4).

Diese Vorsprünge 11, 11' können sich entlang der ganzen Länge des Einbaugeräts 10 erstecken oder nur abschnittsweise, aber dann dort wo sie mit den ersten Stufenrasthaken 21, 21' ; 22, 22' bzw. den zweiten Stufenrasthaken 31, 31' ; 32, 32' der Abdeckblende 20 zusammenarbeiten können. Die Geometrie dieser Vorsprünge 11, 11' sieht vorzugsweise ebenfalls einen senkrechten Abschnitt 11b vor (Fig. 3 u. 4), der mit der Länge auch eine rechteckige Fläche ergibt gegen welche sich die ersten 21, 21' ; 22, 22' bzw. zweiten 31, 31' ; 32, 32' Stufenrasthaken stützen können. Somit wird der feste Halt der Abdeckblende 20 durch die zweiten Stufenrasthaken 31, 31' ; 32, 32' an den Vorsprüngen 11, 11' des Einbaugeräts 10 durch eine 90° -Ecke auf einer soliden Weise gewährleistet (s. Fig. 4a und 4b). Die besagten schrägen Rastflächen 21a, 21a' ; 22a, 22a' ziehen die Abdeckblende 20 immer nach unten auf Anschlag, so dass die ersten Stufenrasthaken 21, 21' ; 22, 22' die Spielfreiheit und den Toleranzausgleich T sicherstellen (s. Fig. 3b). Somit wird ein Wackeln der Abdeckblende 20 verhindert (s. Fig. 3 und 4).

Die Länge des Zentralteils 20a der Abdeckblende 20 ist vorzugsweise gleich der Länge des Einbaugerätes 10. So ist eine lückenlose Anreihung möglich.

Die Erfindung betrifft vorzugsweise eine Kombination, die dadurch gekennzeichnet ist, dass an jeder länglichen Seite der Abdeckblende 20 die gleiche Anzahl an Doppelhaken 21, 31 ; 22 , 32 ; 21, 31', 22', 32' vorhanden ist. Somit kann eine symmetrische, stabile und kostengünstige Anordnung, z.B. von vier Paaren wie auf Figur 1 gezeigt erreicht werden.

In einer nicht dargestellten Variante ist die Kombination dadurch gekennzeichnet, dass die Anzahl an Doppelhaken 21, 31 ; 22 , 32 ; 21, 31', 22', 32' an einer länglichen Seite um eins höher ist als auf der anderen gegenüberliegenden Seite. So können auch asymmetrische Konstruktionen mit weniger Haken, z. B. drei statt vier, realisiert werden.

Die erfindungsgemäße Kombination ist ferner dadurch gekennzeichnet, dass zumindest ein Doppelhaken 21, 31 ; 22, 32 ; 21, 31', 22', 32' einer Seite mit einem Doppelhaken 21, 31 ; 22, 32 ; 21, 31', 22', 32' auf der anderen Seite als ein sich gegenseitig zugewandtes, vorzugsweise genau gegenüberstehendes, Doppelhakenpaar 21, 31 - 21', 31'; 22, 32 - 22', 32' ausgebildet ist. Wie auf Fig. 1 dargestellt ergibt sich somit eine besonders stabile und resistente Konstruktion. Vorteilhafterweise sind alle Paare gleich ausgebildet.

Wie auf Figur 1 dargestellt können die Doppelhaken 21, 31 ; 22, 32 ; 21, 31', 22', 32' symmetrisch (spiegelbildich) zur Längsache und/oder symmetrisch (spiegelbildlich) zur Breitachse der Abdeckblende 20 angeordnet werden.

Vorzugsweise ist die besagte Kombination dadurch gekennzeichnet, dass die schrägen Rastflächen 21a, 21a' ; 22a, 22a' mit einem Winkel von ca. 45 ° zur horizontalen Ebene der Abdeckblende 20 in Richtung Einbaugerät 10 weisen (s. Figuren 3 u. 4).

Die erfindungsgemäße Kombination ist auch dadurch gekennzeichnet, dass die ersten und zweiten Stufenhaken 21, 21' ; 22, 22' ; 31, 31' ; 32, 32' nebeneinander an der Abdeckblende 20 angebracht sind (Fig. 1). Der Abstand zwischen ihnen beträgt etwa die Breite der Stege 21c, 21c' ; 22c, 22c' ; 31c, 31c' ; 32c, 32c' der ersten oder zweiten Stufenrasthaken 21, 21' ; 22, 22' ; 31, 31' ; 32, 32' also in der Regel 4-6 mm, wenn diese im wesentlichen eine rechteckige und flache Form aufweisen (vom Rand 20b aus betrachtet).

Gemäß einer weiteren Ausgestaltungsform und wie auf Figur 2 dargestellt ist die erfindungsgemäße Kombination dadurch gekennzeichnet, dass die ersten und zweiten Stufenhaken 21, 21' ; 22, 22' ; 31, 31' ; 32, 32' jeweils an einem von der Abdeckblende 20 weg zum Einbaugerät 10 hin weisenden Steg 21c, 21c' ; 22c, 22c' ; 31c, 31c' ; 32c, 32c' geformt sind, der jeweils eine gleiche rechteckige senkrechte Grundfläche aufweist, die jeweils in einen treppenförmigen zum Einbaugerät 10 weisenden Vorsprung 21b, 21b', 22b, 22b' ; 31b, 31b', 32b, 32b' übergeht welcher wiederum zur schrägen Rastfläche 21a, 21a' ; 22a, 22a' bzw. zur rechtwinkligen treppenförmigen oberen Rastfläche 31a, 31a' ; 32a ; 32a' übergeht.

In der Ruheposition (fig. 1), d. h. ohne Einbaugerät 10 sind alle o. g. Stege senkrecht. Bei der Verbindung der Abdeckblende 20 mit dem Einbaugerät 10 werden, wie in den Figuren 3 und 4 dargestellt, die besagten Stege zur Seite geschoben, wobei die flexibleren zurückfedernden ersten Stufenrasthaken 21, 21' ; 22, 22' den Toleranzausgleich T schaffen während die starren nicht-zurückfedernden zweiten Stufenrasthaken 31, 31' ; 32, 32' die sichere Haltung der Abdeckblende 20 garantieren.

Vorteilhafterweise ist die erfindungsgemäße Kombination ebenfalls dadurch gekennzeichnet, dass die ersten und zweiten Stufenhaken 21, 21' ; 22, 22' ; 31, 31' ; 32, 32' an ihrem freien Ende jeweils einen verjüngend geformten und abgerundeten Kopf aufweisen. Dies verringert die Verletzungsgefahr für den Benutzer durch die hervorstehenden ersten und zweiten Stufenhaken 21, 21' ; 22, 22' ; 31, 31'; 32, 32'.

Gemäß einer weiteren vorteilhaften Ausgestaltung ist die erfindungsgemäße Kombination dadurch gekennzeichnet, dass die Doppelhakenpaare 21, 31 ; 21', 31' einteilig mit der Abdeckblende 20 ausgebildet sind. Dies kann z. B. beim üblichen Formen solcher Produkte mittels Kunststoff geschehen.

Die vorliegende Kombination ist ferner dadurch gekennzeichnet, dass die Stärke des Stegs 21c, 21c' ; 22c, 22c' ; 31c, 31c' ; 32c, 32c' das Ausmaß der zurückfedernde Eigenschaft des ersten und zweiten Stufenhakens 21, 21' ; 22, 22'; 31, 31' ; 32, 32' bestimmt. So werden die zurückfedernden Stege 21c, 21c' ; 22c, 22c' der ersten Stufenrasthaken 21, 21' ; 22, 22' einfach entsprechend dünner ausgestaltet (z. B. bei dem Plastikspritzgießen) als die massiveren nicht-zurückfedernden Stege 31c, 31c' ; 32c, 32c der zweiten Stufenrasthaken 31, 31' ; 32, 32'. Letztere können ggf. durch Rillen in der Gießform bei der Herstellung durch entstehende Rippen verstärkt oder versteift werden. Wie auf den Figuren 3 und 4 angedeutet können die nicht-zurückfedernden Stege 31c, 31c' ; 32c, 32c der zweiten Stufenrasthaken 31, 31' ; 32, 32' auch eine breitere Basis aufweisen die sich, je mehr man sich von der Abdeckblende 20 in Richtung Einbaugerät 10 entfernt, schmaler wird.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Kombination aus Einbaugerät (10) und Abdeckblende (20), insbesondere für den Einbau in Geräteeinbaukanäle, wobei
die Abdeckblende (20) an ihrer dem Einbaugerät (10) zugewandten Rückseite erste Haltevorrichtungen besitzt,
das Einbaugerät (10) auf jeder seiner äußeren länglichen Seiten jeweils eine zweite Haltevorrichtung besitzt, die mit den ersten Haltevorrichtungen korrespondiert und zusammenarbeitet um die Befestigung der Abdeckblende (20) am Einbaugerät (10) zu ermöglichen,
wobei die ersten Haltevorrichtungen auf der Rückseite der Abdeckblende (20) als aus zwei nebeneinander liegenden Stufenrasthaken gebildeten Doppelhaken (21, 31 ; 21', 31'; 22, 32 ; 22', 32') ausgebildet und so angebracht sind, dass jeweils mindestens ein Doppelhaken (21, 31 ; 21', 31' ; 22, 32 ; 22', 32') an der linken und rechten länglichen Seite des Einbaugeräts (10) angreift,
wobei jeder Doppelhaken (21, 31 ; 21', 31'; 22, 32 ; 22', 32') aus einem flexiblen zurückfedernden ersten Stufenrasthaken (21, 21' ; 22, 22') sowie einem daneben angeordneten starren, nicht-zurückfedernden zweiten Stufenrasthaken (31, 31'; 32, 32') besteht,
wobei die ersten Stufenrasthaken (21, 21' ; 22, 22') jeweils eine schräge Rastfläche (21a, 21a' ; 22a, 22a') und die zweiten Stufenrasthaken (31, 31'; 32, 32') jeweils eine rechtwinklige treppenförmige obere Rastfläche (31a, 31a' ; 32a ; 32a') aufweisen,
wobei die zweite Haltevorrichtung als ein sich länglich erstreckender seitlicher äußerer Vorsprung (11, 11') am Einbaugerät (10) ausgebildet ist, welcher jeweils eine rechtwinklige Außenkante (11a, 11a') aufweist, die als Vorsprung (11, 11') mit der besagten schrägen Rastfläche (21a, 21a' ; 22a, 22a') der ersten Stufenrasthaken (21, 21' ; 22, 22') und der besagten rechtwinkligen treppenförmigen oberen Rastfläche (31a, 31a' ; 32a ; 32a') der zweiten Stufenrasthaken (31, 31'; 32, 32') in Kontakt gerät und kraft- oder formschlüssig mit diesen kooperiert, um eine sichere Befestigung sowie einen Toleranzausgleich T zu gewährleisten und die Abdeckblende (20) am Einbaugerät (10) wackelfrei zu befestigen.

2. Kombination nach Anspruch 1, **dadurch gekennzeichnet, dass** an jeder länglichen Seite die gleiche Anzahl an Doppelhaken (21, 31 ; 22 , 32 ; 21, 31', 22', 32') vorhanden ist.

3. Kombination nach Anspruch 1, **dadurch gekennzeichnet, dass** die Anzahl an Doppelhaken (21, 31 ; 22 , 32 ; 21, 31', 22', 32') an einer länglichen Seite um eins höher ist als auf der anderen gegenüberliegenden Seite.

4. Kombination nach Anspruch 1 oder 2, **dadurch gekennzeichnet, dass** zumindest ein Doppelhaken (21, 31 ; 22, 32 ; 21, 31', 22', 32') einer Seite mit einem Doppelhaken (21, 31 ; 22, 32 ; 21, 31', 22', 32') auf der anderen Seite als ein sich gegenseitig zugewandtes, vorzugsweise genau gegenüberstehendes, Doppelhakenpaar (21, 31 - 21', 31'; 22, 32 ― 22', 32') ausgebildet ist.

5. Kombination nach einem der Ansprüche 1 bis 4, **dadurch gekennzeichnet, dass** die schrägen Rastflächen (21a, 21a' ; 22a, 22a') mit einem Winkel von ca. 45 ° zur horizontalen Ebene der Abdeckblende (20) in Richtung Einbaugerät (10) weisen.

6. Kombination nach einem der Ansprüche 1 bis 5, **dadurch gekennzeichnet, dass** die ersten und zweiten Stufenrasthaken (21, 21' ; 22, 22' ; 31, 31' ; 32, 32') jeweils an einem von der Abdeckblende (20) weg zum Einbaugerät (10) hin weisenden Steg (21c, 21c' ; 22c, 22c' ; 31c, 31c' ; 32c, 32c') geformt sind, der jeweils eine gleiche rechteckige senkrechte Grundfläche aufweist, die jeweils in einen treppenförmigen zum Einbaugerät (10) weisenden Vorsprung (21b, 21b', 22b, 22b' ; 31b, 31b', 32b, 32b') übergeht welcher wiederum zur schrägen Rastfläche (21a, 21a' ; 22a, 22a') bzw. zur rechtwinkligen treppenförmigen oberen Rastfläche (31a, 31a' ; 32a ; 32a') übergeht.

7. Kombination nach einem der Ansprüche 1 bis 6, **dadurch gekennzeichnet, dass** die ersten und zweiten Stufenrasthaken (21, 21' ; 22, 22'; 31, 31' ; 32, 32') an ihrem freien Ende jeweils einen verjüngend geformten und abgerundeten Kopf aufweisen.

8. Kombination nach einem der Ansprüche 1 bis 7, **dadurch gekennzeichnet, dass** die Doppelhakenpaare (21, 31 ; 21', 31') einteilig mit der Abdeckblende (20) ausgebildet sind.

9. Kombination nach Anspruch 8, **dadurch gekennzeichnet, dass** die Stärke des Stegs (21c, 21c' ; 22c, 22c' ; 31c, 31c' ; 32c, 32c') das Ausmaß der zurückfedernden Eigenschaft des ersten und zweiten Stufenrasthakens (21, 21' ; 22, 22' ; 31, 31'; 32, 32') bestimmt.

## Claims

1. Combination of an installation apparatus (10) and a cover panel (20), in particular for the installation in apparatus installation ducts, wherein
the cover panel (20) on the rear side thereof that faces the installation apparatus (10) possesses first holding devices;
the installation apparatus (10) on each of the outer elongate sides thereof possesses in each case one second holding device which corresponds to and interacts with the first holding devices so as to enable the cover panel (20) to be fastened to the installation apparatus (10);
wherein the first holding devices on the rear side of the cover panel (20) are configured as double hooks (21, 31; 21', 31'; 22, 32; 22', 32') formed from two staged latching hooks lying next to one another and are attached such that at least one double hook (21, 31; 21', 31'; 22, 32; 22', 32') engages in each case on the left and the right elongate side of the installation apparatus (10); wherein each double hook (21, 31; 21', 31'; 22, 32; 22', 32') is composed of a flexible resilient first staged latching hook (21, 21'; 22, 22') and a rigid, non-resilient second staged latching hook (31, 31'; 32, 32') disposed next to the former;
wherein the first staged latching hooks (21, 21'; 22, 22') have in each case one oblique latching face (21a, 21a'; 22a, 22a') and the second staged latching hooks (31, 31'; 32, 32') have in each case one rectangular step-shaped upper latching face (31a, 31a'; 32a, 32a');
wherein the second holding device is configured as a lateral outer protrusion (11, 11') which extends in an elongate manner on the installation apparatus (10) and which has in each case one rectangular external edge (11a, 11a') which as a protrusion (11, 11') comes into contact and cooperates with said oblique latching face (21a, 21'; 22a, 22a') of the first staged latching hooks (21, 21'; 22, 22') and said rectangular step-shaped upper latching face (31a, 31a'; 32a; 32a') of the second staged latching hooks (31, 31'; 32, 32') in a force-fitting or form-fitting manner so as to guarantee a secure fastening and a compensation of tolerances T and to fasten in a wobble-free manner the cover panel (20) on the installation apparatus (10).

2. Combination according to Claim 1, **characterized in that** the same number of double hooks (21, 31; 22, 32; 21, 31', 22', 32') is present on each elongate side.

3. Combination according to Claim 1, **characterized in that** the number of double hooks (21, 31; 22, 32; 21, 31', 22', 32') on one elongate side is greater by one than on the other opposite side.

4. Combination according to Claim 1 or 2, **characterized in that** at least one double hook (21, 31; 22, 32; 21, 31', 22' 32') of one side, conjointly with a double hook (21, 31; 22, 32; 21, 31', 22', 32') on the other side, is configured as a mutually facing, preferably exactly opposite, double hook pair (21, 31 - 21', 31'; 22, 32 - 22', 32').

5. Combination according to one of Claims 1 to 4, **characterized in that** the oblique latching faces (21a, 21a'; 22a, 22a') point in the direction of the installation apparatus (10) at an angle of approx. 45° in relation to the horizontal plane of the cover panel (20).

6. Combination according to one of Claims 1 to 5, **characterized in that** the first and the second staged latching hooks (21, 21'; 22, 22'; 31, 31'; 32, 32') are in each case moulded on a web (21c, 21c'; 22c, 22c'; 31c, 31c'; 32c, 32c') which from the cover panel (20) points away towards the installation apparatus (10) and which has in each case an identical rectangular vertical base area that in each case transitions to a step-shaped protrusion (21b, 21b', 22b, 22b'; 31b, 31b', 32b, 32b') pointing towards the installation apparatus (10), said step-shaped protrusion (21b, 21b', 22b, 22b'; 31b, 31b', 32b, 32b') in turn transitioning to the oblique latching face (21a, 21a'; 22a, 22a'), or to the rectangular step-shaped upper latching face (31a, 31a'; 32a, 32a'), respectively.

7. Combination according to one of Claims 1 to 6, **characterized in that** the first and the second staged latching hooks (21, 21'; 22, 22'; 31, 31'; 32, 32') on the free end thereof have in each case one taper-shaped and rounded head.

8. Combination according to one of Claims 1 to 7, **characterized in that** the double hook pairs (21, 31; 21', 31') are configured so as to be integral to the cover panel (20).

9. Combination according to Claim 8, **characterized in that** the thickness of the web (21c, 21c'; 22c, 22c'; 31c, 31c'; 32c, 32c') determines the degree of the resilient characteristic of the first and the second staged latching hook (21, 21'; 22, 22'; 31, 31'; 32, 32').

## Revendications

1. Combinaison d'un appareil d'installation (10) et d'un obturateur (20), notamment pour l'installation dans des canaux d'installation d'appareils, l'obturateur (20) possédant des premiers dispositifs de retenue sur son côté arrière tourné vers l'appareil d'installation (10),
l'appareil d'installation (10) possédant à chaque fois sur chacun de ses côtés allongés extérieurs un deuxième dispositif de retenue, qui correspond aux et coopère avec les premiers dispositifs de retenue pour permettre la fixation de l'obturateur (20) sur l'appareil d'installation (10),
les premiers dispositifs de retenue sur le côté arrière de l'obturateur (20) étant configurés sous la forme de crochets doubles (21, 31 ; 21', 31' ; 22, 32 ; 22', 32') formés par deux crochets d'encliquetage échelonnés situés l'un à côté de l'autre, et étant disposés de telle sorte qu'à chaque fois au moins un crochet double (21, 31 ; 21', 31' ; 22, 32 ; 22', 32') agit sur le côté allongé gauche et droit de l'appareil d'installation (10),
chaque crochet double (21, 31 ; 21', 31' ; 22, 32 ; 22', 32') étant constitué d'un premier crochet d'encliquetage échelonné (21, 21' ; 22, 22') flexible à rappel élastique, ainsi que d'un deuxième crochet d'encliquetage échelonné (31, 31' ; 32, 32') rigide, sans rappel élastique, agencé à côté,
les premiers crochets d'encliquetage échelonnés (21, 21' ; 22, 22') présentant chacun une surface d'encliquetage oblique (21a, 21a' ; 22a, 22a') et les deuxièmes crochets d'encliquetage échelonnés (31, 31' ; 32, 32') présentant chacun une surface d'encliquetage supérieure à angle droit en forme d'escalier (31a, 31a' ; 32a ; 32a'),
le deuxième dispositif de retenue étant configuré sous la forme d'une protubérance extérieure latérale (11, 11') s'étendant sous forme allongée sur l'appareil d'installation (10), qui présente à chaque fois un bord extérieur à angle droit (11a, 11a'), qui entre en contact en tant que protubérance (11, 11') avec ladite surface d'encliquetage oblique (21a, 21a' ; 22a, 22a') des premiers crochets d'encliquetage échelonnés (21, 21' ; 22, 22') et ladite surface d'encliquetage supérieure à angle droit en forme d'escalier (31a, 31a' ; 32a ; 32a') des deuxièmes crochets d'encliquetage échelonnés (31, 31'; 32, 32') et coopère par accouplement de force ou de forme avec celles-ci, afin d'assurer une fixation sécurisée, ainsi qu'une compensation de tolérance T, et de fixer l'obturateur (20) sur l'appareil d'installation (10) sans vacillements.

2. Combinaison selon la revendication 1, **caractérisée en ce que** le même nombre de crochets doubles (21, 31 ; 22, 32 ; 21, 31' ; 22', 32') est présent sur chaque côté allongé.

3. Combinaison selon la revendication 1, **caractérisée en ce que** le nombre de crochets doubles (21, 31 ; 22, 32 ; 21, 31' ; 22', 32') sur un côté allongé est d'un de plus que sur l'autre côté opposé.

4. Combinaison selon la revendication 1 ou 2, **caractérisée en ce qu'**au moins un crochet double (21, 31 ; 22, 32 ; 21, 31'; 22', 32') d'un côté est configuré avec un crochet double (21, 31 ; 22, 32 ; 21, 31' ; 22', 32') sur l'autre côté sous la forme d'une paire de crochets doubles (21, 31 - 21', 31' ; 22, 32 - 22', 32') mutuellement tournés l'un vers l'autre, de préférence exactement en vis-à-vis.

5. Combinaison selon l'une quelconque des revendications 1 à 4, **caractérisée en ce que** les surfaces d'encliquetage obliques (21a, 21a' ; 22a, 22a') sont orientées avec un angle d'environ 45° par rapport au plan horizontal de l'obturateur (20) en direction de l'appareil d'installation (10).

6. Combinaison selon l'une quelconque des revendications 1 à 5, **caractérisée en ce que** les premiers et deuxièmes crochets d'encliquetage échelonnés (21, 21' ; 22, 22' ; 31, 31' ; 32, 32') sont à chaque fois formés sur une entretoise (21c, 21c' ; 22c, 22c' ; 31c, 31c' ; 32c, 32c') orientée à distance de l'obturateur (20) vers l'appareil d'installation (10), qui présente à chaque fois une surface de base verticale rectangulaire identique, qui se raccorde à chaque fois à une protubérance en forme d'escalier (21b, 21b', 22b, 22b' ; 31b, 31b', 32b, 32b') orientée vers l'appareil d'installation (10), qui se raccorde elle-même à la surface d'encliquetage oblique (21a, 21a' ; 22a, 22a') ou à la surface d'encliquetage supérieure à angle droit en forme d'escalier (31a, 31a' ; 32a ; 32a').

7. Combinaison selon l'une quelconque des revendications 1 à 6, **caractérisée en ce que** les premiers et deuxièmes crochets d'encliquetage échelonnés (21, 21' ; 22, 22' ; 31, 31' ; 32, 32') présentent à chaque fois à leur extrémité libre une tête effilée et arrondie.

8. Combinaison selon l'une quelconque des revendications 1 à 7, **caractérisée en ce que** les paires de crochets doubles (21, 31 ; 21', 31') sont configurées d'un seul tenant avec l'obturateur (20).

9. Combinaison selon la revendication 8, **caractérisée en ce que** l'épaisseur de l'entretoise (21c, 21c'; 22c, 22c' ; 31c, 31c' ; 32c, 32c') détermine l'ampleur de la propriété de rappel élastique des premiers et deuxièmes crochets d'encliquetage échelonnés (21, 21' ; 22, 22' ; 31, 31' ; 32, 32').
